# EUROPEAN PATENT APPLICATION

(11) **EP 4 691 631 A1**
(43) Date of publication of application: **11.02.2026**
(21) Application number: 24797297.9
(22) Date of filing: 02.04.2024
(51) Int. Cl.: B01J 23/78, B01J 21/02, B01J 35/61, B01J 37/10

(54) **CATALYST FOR METHANE REFORMING AND MANUFACTURING METHOD THEREOF**

(30) Priority: 28.04.2023 KR 20230055933
(71) Applicant: Hanwha Solutions Corporation, Jung-gu Seoul 04541 (KR); Korea Advanced Institute of Science and Technology, Daejeon 34141 (KR)
(72) Inventor: BAE, Junemin, Daejeon 34128 (KR); CHUN, Jeong Hwan, Daejeon 34128 (KR); CHOI, Minkee, Daejeon 34141 (KR); KIM, Yeongmin, Daejeon 34141 (KR)
(74) Representative: Berggren Oy
(86) International application number: PCT/KR2024/004220
(87) International publication number: WO 2024/225636

(57) **Abstract**

The present invention relates to catalyst for a methane reforming reaction and a manufacturing method thereof. More particularly, the objective of the present invention is to provide a highly dispersed nickel catalyst with secured structural stability that may be used in a methane reforming reaction using carbon dioxide, and a manufacturing method thereof, wherein the nickel is highly dispersed and has excellent structural stability during the methane reforming reaction, thereby providing a nickel catalyst that exhibits excellent catalytic performance in a methane reforming reaction using carbon dioxide.

## Description

### [TECHNICAL FIELD]

### CROSS-REFERENCE TO RELATED APPLICATION(S)

This application claims the benefits of Korean Patent Applications No. 10-2023-0055933 filed on April 28, 2023 with the Korean Intellectual Property Office, the disclosure of which is incorporated herein by reference in its entirety.

The present invention relates to a catalyst for methane reforming and manufacturing method thereof. In particular, the present invention relates to a catalyst for methane reforming with secured structural stability that may be used in a methane reforming reaction using carbon dioxide, and a manufacturing method thereof.

### [BACKGROUND OF ART]

As the increasing concentration of carbon dioxide in the atmosphere causes various problems, leading to active research efforts aimed at converting carbon dioxide into useful substances. Among such efforts, a methane reforming reaction using carbon dioxide is a reaction in which carbon dioxide and methane are reacted with a catalyst at a high temperature to produce industrially useful synthesis gas, for example, a mixture of hydrogen and carbon monoxide. The obtained synthesis gas has the advantage that it may be directly applied to reactions for synthesizing various chemicals or hydrocarbons. However, despite these advantages, commercialization is difficult because the catalyst for the reforming reaction is unstable and has low activity.

In addition, since a methane reforming reaction using carbon dioxide shows higher conversion as the temperature increases, the reaction must be performed at a high temperature to obtain a high-purity product; however, when a catalyst is generally exposed to a high temperature for a long time, there is a problem that the active metal is sintered, causing the surface exhibiting activity to decrease, or a by-product, carbon (for example, coke), covers the surface of the active metal, whereby the activity decreases over time. Accordingly, to minimize side reactions and sintering, a method of using a noble metal has been considered, but for economic reasons, a catalyst to replace the noble metal is needed.

To this end, a manufacturing method of a catalyst using nickel and molybdenum as active materials on an MgO support by an impregnation method has been developed, but there is still a problem of a decrease in the active surface due to sintering and coke deposition.

### [DETAILED DESCRIPTION OF THE INVENTION]

### [Technical Problem]

In the present invention, there are provided a catalyst for methane reforming and manufacturing method thereof. Specifically, the present invention provides a catalyst for methane reforming with ensured structural stability and a manufacturing method thereof, which may be used in a methane reforming reaction using carbon dioxide.

### [Technical Solution]

According to one embodiment of the present invention, a catalyst for methane reforming comprises nickel (Ni), boron (B), and magnesium (Mg), and a B content is more than 1 mol parts and less than 35 mol parts based on 100 mol parts of Mg.

In another embodiment of the present invention, a manufacturing method of a catalyst for methane reforming comprises: preparing an aqueous solution mixture by mixing MgO, a nickel (Ni) precursor and boron (B) precursor (step 1); hydrothermally synthesizing the mixture of step 1 (step 2); and drying and sintering the hydrothermally synthesized composition of step 2 (step 3); wherein in step 1, the B precursor is mixed in an amount such that an B content is more than 1 mol parts and less than 35 mol parts based on 100 mol parts of Mg.

### [ADVANTAGEOUS EFFECTS]

According to the present invention, excellent structural stability is achieved before and after a methane reforming reaction by introducing a bimetallic element, and sintering of Ni nanoparticles during the reforming reaction is suppressed, thereby maintaining high dispersion. Therefore, the present invention provides a nickel catalyst which exhibits excellent catalytic performance in a methane reforming reaction using carbon dioxide by suppressing sintering and coke deposition.

### [Brief description of the drawing]

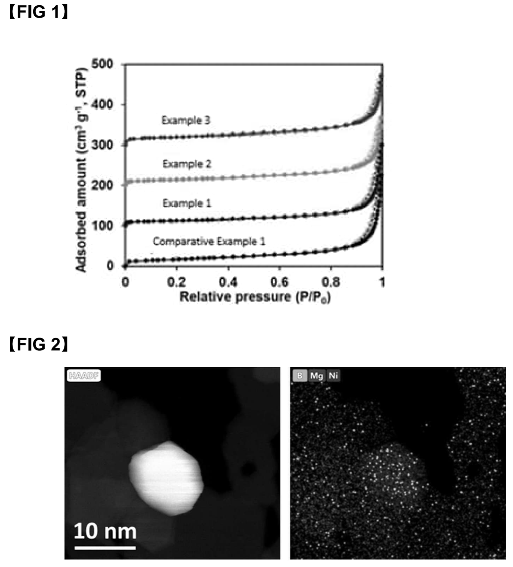

FIG. 1 illustrates the results of nitrogen adsorption analysis of Examples 1 to 3 and Comparative Example 1 according to the present disclosure.
FIG. 2 illustrates TEM and EDS mapping images obtained after the methane reforming reaction of Example 3 according to the present disclosure.

### [DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise.

It will be further understood that the terms "include", "have", or "possess" when used in this specification, specify the presence of stated features, steps, components, or combinations thereof, but do not preclude the presence or addition of one or more other features, steps, components, or combinations thereof.

As the present invention may be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

In a conventional methane reforming reaction using carbon dioxide, it is known that a Ni-MgO catalyst has high activity, but there was a problem in that deactivation proceeds rapidly under high-temperature reaction conditions due to sintering of metal particles and coke deposition (coke formation).

Accordingly, a method using hydrothermal synthesis has been proposed. A Ni-MgO catalyst manufactured by hydrothermal synthesis had the advantage that it achieves high dispersion of nickel (Ni), and coke deposition is suppressed during the reaction compared to catalysts manufactured by other synthesis methods (e.g., impregnation method, co-precipitation method, etc.). However, there is still a problem in that structural stability is significantly reduced due to the sintering of the MgO support under high-temperature reaction conditions.

However, when nickel (Ni) nanoparticles form large particles due to sintering, this promotes coke formation during the reforming reaction, causing a problem in that the catalyst activity is significantly reduced during the reaction. Therefore, suppressing the sintering of nickel (Ni) nanoparticles during the reforming reaction to maintain high dispersion is very important for maintaining the catalyst activity.

In order to overcome this issue, a bimetallic element (B) was introduced during the hydrothermal synthesis of a Ni-MgO catalyst to form a Ni-B intermetallic compound structure, thereby manufacturing a catalyst with improved structural stability and performance. The catalyst of the present disclosure achieves excellent structural stability during the methane reforming reaction compared to conventionally known Ni-MgO (hydrothermal synthesis) and Ni-MgAl₂O₄ (co-precipitation method) catalysts, and thus exhibits excellent catalytic performance in the methane reforming reaction using carbon dioxide.

According to one embodiment of the present disclosure, the catalyst comprises nickel (Ni), boron (B) and magnesium (Mg), and the boron (B) content may be more than 1 mol parts and less than 35 mol parts based on 100 mol parts of Mg. Specifically, based on 100 mol parts of Mg, the boron (B) content may be more than 1 mol parts, 5 mol parts or more, 10 mol parts or more, 15 mol parts or more, 20 mol parts or more, or 25 mol parts or more and less than 35 mol parts, 34 mol parts or less, 33 mol parts or less, 32 mol parts or less, 31 mol parts or less, or 30 mol parts or less.

When the boron (B) content satisfies the above range, the Ni-B intermetallic compound, that is, an alloy structure, which is intended to be achieved in the present disclosure, is formed to secure the structural stability of the catalyst during the methane reforming reaction, and the boron may be highly dispersed in the MgO support lattice to form a solid solution (alloy).

In the case of a catalyst containing nickel (Ni) on alumina (Al₂O₃), there is a problem in that coke deposition, that is, coking, occurs on the catalyst surface during a reforming or dehydrogenation reaction, thereby deteriorating the catalyst activity during the reaction. In response to this, it has been reported that the addition of boron suppresses coke deposition on the catalyst surface due to changes in the electronic structure of Ni nanoparticles and improved dispersion.

However, when the boron content is too high, a B₂O₃ crystalline structure may form on the catalyst surface, blocking active sites where the reactions occur, and as a result, the catalyst activity may be significantly deteriorated.

The magnesium (Mg) in the catalyst for methane reforming may be present in the form of magnesium oxide (MgO) as a support. Specifically, the catalyst according to an embodiment of the present invention may be in a form where a Ni-B intermetallic compounds are dispersed as nanoparticles on MgO.

The nickel (Ni) content may be 2 parts by weight to 10 parts by weight based on 100 parts by weight of the catalyst for methane reforming. Specifically, the Ni content may be 2 parts by weight or more, 3 parts by weight or more, 4 parts by weight or more, or 5 parts by weight or more and 10 parts by weight or less, 9 parts by weight or less, 8 parts by weight or less, 7 parts by weight or less, or 6 parts by weight or less based on 100 parts by weight of the catalyst.

When the nickel (Ni) content satisfies the above range, the formation of excessively large particles by nickel, which promotes coke formation, is suppressed, thereby preventing an adverse effect on the catalyst activity, and a sufficient amount of nickel active phase required for the methane reforming reaction may be secured.

When the nickel (Ni) content is too excessive, nickel may form large particles, which promote coke formation, and the catalyst activity may be significantly deteriorated, and when the nickel content is too small, there may be a problem in that the amount of nickel active phase required for the reaction is insufficient, and thus the catalyst activity is not secured.

Furthermore, in the catalyst of an embodiment of the present disclosure, the remainder excluding the boron (B) content and the nickel (Ni) content may be the MgO support, based on the total weight of the catalyst.

Specifically, the catalyst of an embodiment of the present disclosure may include only boron (B), nickel (Ni), and magnesium (Mg) as metal elements.

In addition, in the case of a conventional catalyst for methane reforming comprising nickel (Ni) on an alumina (Al₂O₃) support, there is a problem in that acid sites(acid point) are present on the alumina, which induces coke deposition, that is, coking, on the catalyst surface during the reforming reaction, thereby deteriorating the catalyst activity during the reaction. However, the catalyst of the present disclosure does not include alumina but instead includes MgO, and compared to alumina, MgO has very few acid sites, that is, it may be considered to have no acid sites, and accordingly, relatively less coking occurs, which has the advantage of maintaining catalyst activity. In addition, MgO has excellent basicity, resulting in excellent adsorption of reactants and good reactivity. However, when manufactured by a conventional impregnation method, there is a problem of low dispersion of nickel and small surface area, and thus, the present disclosure aims to provide a manufacturing method including hydrothermal synthesis.

The catalyst may have a Ni-B nanoparticle size of 3.0 to 8.0 nm after reduction. Furthermore, the catalyst may have a nanoparticle size of 5 nm to 17 nm after 48 hours of methane reforming reaction. Specifically, the catalyst may have a nanoparticle size of 5 nm to 17 nm after 48 hours of methane reforming reaction.

Since no crystallization of nickel (Ni) is observed when only a sintering step is performed, the size of nanoparticles may be observed by reduction under a hydrogen atmosphere in order to confirm structural stability before and after the methane reforming reaction. When Ni-B forms large particles, this promotes coke formation during the reforming reaction, which may significantly deteriorate the catalyst activity. Furthermore, the catalyst of the present invention maintains structural stability and catalyst efficiency because the nanoparticle size of Ni-B does not increase before and after being used for the reforming reaction.

In addition, in the present invention, since Ni-B is highly dispersed on MgO to achieve high efficiency, even when the catalyst is used in a high-temperature methane reforming reaction using carbon dioxide, the catalyst is not sintered, and coke is not deposited on the catalyst surface, so the catalyst efficacy is not deteriorated.

The catalyst may have a BET specific surface area of 10 m²/g to 50 m²/g as measured using a nitrogen adsorption method.

Specifically, the BET specific surface area of the catalyst may be 10 m²/g or more, 20 m²/g or more, 30 m²/g or more, or 40 m²/g or more and 50 m²/g or less, 49 m²/g or less, 48 m²/g or less, 47 m²/g or less, 46 m²/g or less or 45 m²/g or less.

The catalyst may be used for a methane reforming reaction using carbon dioxide. The catalyst according to an embodiment of the present invention has a high BET specific surface area, so when it is used in a methane reforming reaction using carbon dioxide conducted at a high temperature, the methane reforming processing rate is fast, the processing capacity is high, there is little or no sintering of the catalyst as the reaction progresses, and the amount of coke deposition is small, which has the advantage that the catalyst efficiency is not deteriorated during the reaction.

Furthermore, the catalyst may have a lattice constant of MgO of 4.1 Å to 4.2 Å, using X-ray diffraction analysis. This is a value indicating that MgO lattice contraction has occurred by introducing a bimetallic element (boron, B). The occurrence of MgO lattice contraction may affect the electronic structure and oxidation-reduction properties of the catalyst surface, and may affect the dispersion of the supported nickel (Ni).

The catalyst for methane reforming of the present invention has excellent structural stability by introducing a bimetallic element (boron, B) during the hydrothermal synthesis of a Ni-MgO catalyst. Accordingly, compared to a conventional Ni-MgO catalyst manufactured by hydrothermal synthesis without the introduction of a bimetallic element, the catalyst of the present invention, into which the bimetallic element (boron, B) is introduced, exhibits no decrease in methane and carbon dioxide conversion rates before and after 48 hours of the methane reforming reaction.

This is because boron (B) is highly dispersed in the MgO support lattice to form a solid solution (alloy). At this time, the occurrence of MgO lattice contraction may affect the electronic structure of the catalyst surface and oxidation-reduction properties, and may affect the dispersion of the supported nickel (Ni). During the reforming reaction, boron (B), which is a bimetallic element, forms an intermetallic compound with nickel, and coke deposition on the catalyst surface may be suppressed due to the change in the electronic structure and the improvement in the dispersion of Ni nanoparticles.

Furthermore, an embodiment of the present invention provides a manufacturing method of a catalyst, comprising: preparing an aqueous solution mixture by mixing MgO, a nickel (Ni) precursor and boron (B) precursor (step 1); hydrothermally synthesizing the mixture of step 1 (step 2); and drying and sintering the hydrothermally synthesized composition of step 2 (step 3).

In step 1, the boron (B) precursor may be mixed in an amount such that an boron (B) content may be more than 1 mol parts and less than 35 mol parts based on 100 mol parts of Mg. That is, the boron (B) precursor may be added in an amount such that the boron (B) content in the final product, the catalyst, is in the range of more than 1 mol parts and less than 35 mol parts based on 100 mol parts of Mg. Specifically, the boron (B) precursor may be mixed in an amount such that an boron (B) content may be more than 1 mol parts, 5 mol parts or more, 10 mol parts or more, 15 mol parts or more, 20 mol parts or more, or 25 mol parts or more and less than 35 mol parts, 34 mol parts or less, 33 mol parts or less, 32 mol parts or less, 31 mol parts or less, or 30 mol parts or less, based on 100 mol parts of Mg.

When the content of the boron (B) precursor satisfies the above range, the structural stability of the catalyst during the methane reforming reaction, which is intended to achieved in the present disclosure, may be secured, and boron may be highly dispersed in the MgO support lattice to form a solid solution (alloy).

In step 1, the nickel (Ni) precursor may be mixed in an amount such that the nickel (Ni) content is 2 parts by weight to 10 parts by weight based on 100 parts by weight of the catalyst. That is, the nickel (Ni) precursor may be added in an amount such that the nickel (Ni) content in the final product, the catalyst, is in the range of 2 to 10 parts by weight based on 100 parts by weight of the catalyst. Specifically, the nickel (Ni) precursor may be mixed in an amount such that the nickel (Ni) content is 2 parts by weight or more, 3 parts by weight or more, 4 parts by weight or more, or 5 parts by weight or more and 10 parts by weight or less, 9 parts by weight or less, 8 parts by weight or less, 7 parts by weight or less, or 6 parts by weight or less, based on 100 parts by weight of the catalyst.

When the content of the nickel (Ni) precursor satisfies the above range, the formation of excessively large nickel particles, which promotes coke formation, is suppressed, thereby preventing an adverse effect on catalyst activity, and a sufficient amount of nickel active phase required for the methane reforming reaction may be secured.

The boron (B) precursor of step 1 is at least one selected from the group consisting of H₃BO₃, BI₃, BN, BF₃, BCl₃, B₂O₃, CB₄, BF₃·2H₂O, BBr₃, and LiBH₄. Specifically, the boron (B) precursor of step 1 may be H₃BO₃.

The nickel (Ni) precursor of step 1 is at least one selected from the group consisting of Ni(CH₃COO)₂·4H₂O, NiCl₂, NiCl₂·6H₂O, Ni(NO₃)₂, NiSO₄, (NH₄)₂Ni(SO₄)₂·6H₂O, NiBr₂, NiCO₃, NiF₂, NiI₂, NiC₂O₄·2H₂O and Ni(ClO₄)₂·6H₂O. Specifically, the nickel (Ni) precursor of step 1 may be Ni(CH₃COO)₂·4H₂O.

Furthermore, step 1 may comprise: preparing a MgO suspension; preparing a nickel (Ni) precursor aqueous solution; preparing a boron (B) precursor aqueous solution; dropwise adding the nickel (Ni) precursor aqueous solution to the MgO suspension; and dropwise adding the boron (B) precursor aqueous solution to a mixed solution of MgO and the nickel (Ni) precursor and stirring.

The hydrothermal synthesis of step 2 may be performed at a temperature 100 to 300°C for 12 to 48 hours. Specifically, the hydrothermal synthesis may be performed at a temperature 100°C or more, 110°C or more, 120°C or more, or 150°C or more and 300°C or less, 250°C or less, or 200°C or less.

Hydrothermal synthesis is a method of synthesizing a substance using an aqueous solution under high temperature and high pressure, in which the substance synthesis is performed by heat treatment at a temperature above the boiling point of a commonly used solvent, and it is a single crystal synthesis method that depends on the solubility of the substance. In hydrothermal synthesis, particles are highly dispersed in a solution, and thus the method may be adopted to prepare a solid solution in which nickel (Ni) is uniformly dispersed on MgO, as in the present invention. In the present invention, in the synthesis step, the aqueous solution mixture of MgO and the nickel (Ni) precursor reacts, such that nickel (Ni) is highly dispersed on MgO to form a solid solution, and MgO forms pores, thereby increasing the BET specific surface area.

Specifically, the hydrothermal synthesis of the present invention may be performed at a temperature of 120 to 200°C for 22 to 26 hours.

The mixture synthesized in step 2 may undergo the drying and sintering steps of step 3.

The drying of step 3 may be performed at 50 to 150°C for 2 to 24 hours, and specifically at 70 to 110°C for 10 to 16 hours.

The sintering of step 3 may be performed at 600 to 1000°C for 2 to 6 hours, and specifically at 700 to 900°C for 3 to 5 hours.

As described in the catalyst section above, the manufacturing method of a catalyst of the present invention is characterized in that by using hydrothermal synthesis, compared to a manufacturing method using an impregnation method as in the prior art, the manufactured catalyst does not undergo sintering even in a high-temperature reforming reaction, there is no coke deposition on the surface so that catalyst activity is maintained, and structural stability is maintained even when a methane reforming reaction is performed.

Hereinafter, the present invention will be described in more detail by way of the following experimental examples. However, the following experimental examples are for illustrative purposes only, and the scope of the present invention is not limited thereto.

### [Experimental Example]

### <Example 1>

A Ni-B-MgO catalyst was to be manufactured using a nickel (Ni) precursor, an boron (B) precursor, and an MgO raw material.

First, an MgO aqueous suspension was prepared by adding 4 g of magnesium oxide [MgO] to 140 mL of distilled water and stirring at 500 rpm at room temperature.

At the same time, a nickel (Ni) precursor aqueous solution was prepared by adding 0.893 g of nickel acetate tetrahydrate [Ni(CH₃COO)₂·4H₂O] to 20 mL of distilled water and dissolving it by stirring, wherein the amount of the nickel (Ni) precursor was controlled such that the nickel (Ni) content was 5 parts by weight based on 100 parts by weight of the methane reforming catalyst.

Thereafter, the nickel (Ni) precursor solution was added dropwise to the MgO suspension under stirring using a pipette, and the resulting mixture was stirred at the same speed at room temperature for 30 minutes.

At the same time, a nickel (Ni) precursor aqueous solution was prepared by adding 0.306 g of boric acid [H₃BO₃] to 20 mL of distilled water and dissolving it by stirring, wherein the amount of the boron (B) precursor was controlled such that the boron (B) content was 5 mol parts based on 100 mol parts of Mg.

Thereafter, the boron (B) precursor solution were added dropwise to the nickel (Ni) and MgO suspension under stirring using a pipette, and the resulting mixture was stirred at the same speed at room temperature for 2 hours.

The stirred suspension was subjected to hydrothermal synthesis at 200 °C for 24 hours in a Teflon-lined autoclave.

The obtained suspension was filtered and washed 4 times with distilled water using a filtration apparatus, and then dried at 100 °C for 12 hours to remove moisture. The dried sample was sintered at 900 °C (heating rate: 2 °C/min) in air for 4 hours.

### <Example 2>

Example 2 was performed in the same manner as in Example 1, except that 0.612 g of boric acid [H₃BO₃] was used such that the boron (B) content was 10 mol parts based on 100 mol parts of Mg in the catalyst.

### <Example 3>

Example 3 was performed in the same manner as in Example 1, except that 1.224 g of boric acid [H₃BO₃] was used such that the boron (B) content was 20 mol parts based on 100 mol parts of Mg in the catalyst.

### <Example 4>

Example 4 was performed in the same manner as in Example 1, except that 1.836 g of boric acid [H₃BO₃] was used such that the boron (B) content was 30 mol parts based on 100 mol parts of Mg in the catalyst.

### <Comparative Example 1>

Comparative Example 1 was performed in the same manner as in Example 1, except that boric acid [H₃BO₃]was not used.

### <Comparative Example 2>

Comparative Example 2 was performed in the same manner as in Example 1, except that 0.061 g of boric acid [H₃BO₃] was used such that the boron (B) content was 1 mol parts based on 100 mol parts of Mg in the catalyst.

### <Comparative Example 3>

Comparative Example 3 was performed in the same manner as in Example 1, except that 2.142 g of boric acid [H₃BO₃] was used such that the born (B) content was 35 mol parts based on 100 mol parts of Mg in the catalyst.

### <Comparative Example 4>

In a different manner from the Examples, a Ni-B-MgO-IP catalyst was manufactured using a impregnation method as follows. 0.893 g of nickel acetate tetrahydrate [Ni(CH₃COO)₂·4H₂O], 1.224 g of boric acid [H₃BO₃] were added to 0.5 mL of distilled water and dissolved by performing sonication, such that the nickel (Ni) content was 5 parts by weight based on 100 parts by weight of the catalyst, and the boron (B) content was 20 mol parts based on 100 mol parts of Mg. Thereafter, the nickel (Ni) precursor and boron (B) precursor solution was impregnated onto 4 g of MgO using the incipient wetness impregnation method, and the impregnated sample was dried and sintered in the same manner as in Example 1.

### <Comparative Example 5>

Comparative Example 5 was performed in the same manner as in Comparative Example 4, except that boric acid [H₃BO₃]was not used.

### <Experimental Example 1>

To determine the specific surface area and pore structure of the catalysts of the Examples and Comparative Examples, a nitrogen adsorption analysis was performed using a Tristar 2 3020 instrument. Before the nitrogen adsorption analysis, the samples were pretreated for 8 hours at 150 °C under vacuum.

The BET specific surface area was calculated through the BET specific surface area S equation. In the graph of Adsorbed amount(v)/P/P₀(A), when the y-axis is plotted as 1/v(1-A) and x-axis is plotted as A in the range of 0.15<A<0.3, the slope is 1/vm. The vm represents the volume of N₂ molecules covering the surface of the catalyst. Since each N₂ molecule occupies 0.162 nm, and the BET specific surface area S was calculated by S=(vm x N x s)/mv, where N is Avogadro's number (6.02*10²³), s is the cross-section area of 0.162 nm², and mv is the molar volume per mole of gas molecules.

The values of BET specific surface area are shown in Table 1 below.

### <Experimental Example 2>

X-ray diffraction analysis was performed using a RIGAKU SmartLab instrument in order to confirm the crystalline structure and lattice information of the Examples and Comparative Examples. ach catalyst sample was placed in a glass holder with a depth of 0.2 mm, and Cu Kα radiation having a wavelength of 1.5406 nm was applied. The X-ray scan was measured from 20° to 80° at a scan rate of 5° min⁻¹ with an interval of 0.01°. The lattice constant of MgO was calculated through Bragg's law, and when the X-ray wavelength λ and the incident angle θ of the X-ray were determined through the equation λ = 2d·sinθ, the interplanar spacing d of the crystal lattice could be calculated from the diffraction pattern. Based on the diffraction pattern of the (200) plane index, d₂₀₀ can be represented as a₂₀₀/2, and therefore, the MgO lattice constant a₂₀₀ was calculated as λ/sinθ.

### <Experimental Example 3>

To confirm the activity and stability of the Examples and Comparative Examples, a methane reforming reaction using carbon dioxide was conducted. Specifically, first, 8 mg of catalyst particles (200-300 µm) were mixed with SiO₂ at a mass ratio of 9:1 and then loaded into a cylindrical quartz reactor (inner diameter: 10 mm), and the temperature was increased to 900 °C (heating rate: 10 °C/min) in a 100% hydrogen atmosphere to reduce the catalyst. Subsequently, the hydrogen atmosphere was maintained for 2 hours, followed by purging in a nitrogen atmosphere for 30 minutes, and then a methane-carbon dioxide mixed gas was introduced together with nitrogen gas as an internal standard gas so that the concentration of the methane-carbon dioxide mixed gas would be 90% of the total feed gas flow rate (45.5 kPa CH₄; 45.5 kPa CO₂; 9.1 kPa N₂).

The Gas Hourly Space Velocity (GHSV) based on the reactants was fixed at 1,200 L/gh, and the methane reforming reaction using carbon dioxide was conducted for 48 hours, and the products (H₂, CO) and residual reactants (CH₄, CO₂) were quantified using a gas chromatography (GC) equipped with a TCD detector and a carboxen-1000 column. And the results are shown in Table 1 below.

The CH₄ and CO₂ conversion rates were calculated using the equation: Conversion rate = GHSV x reactant concentration x conversion ratio. After the 48-hour reaction, the amount of coke deposition on the catalyst was measured through Elemental Analysis.

### <Experimental Example 4>

The structure size of the Ni-B intermetallic compound of the Examples and Comparative Examples was measured by TEM images before and after the 48-hour methane reforming. In the case of the catalyst of the present invention, because crystallization of nickel (Ni) is not observed at all when subjected only up to the sintering step, the size of the nanoparticles was observed after reduction in a hydrogen atmosphere in order to confirm the structural stability before and after the methane reforming reaction.

**[Table 1]**

| Category | unit | Exampl e 1 | Exampl e 2 | Exampl e 3 | Exampl e 4 | Comparativ e Example 1 | Comparativ e Example 2 | Comparativ e Example 3 | Comparativ e Example 4 | Comparativ e Example 5 |
|---|---|---|---|---|---|---|---|---|---|---|
| Ni content (based on 100 parts by weight of the catalyst) | parts by weigh t | 5 | 5 | 5 | 5 | 5 | 5 | 5 | 5 | 5 |
| B content (based on 100 mol parts of Mg) | mol parts | 5 | 10 | 20 | 30 | 0 | 1 | 35 | 20 | 0 |
| **BET** specific surface area | m²/g | 49 | 48 | 45 | 41 | 55 | 54 | 38 | 5 | 6 |
| **MgO lattice** constant (a₂₀₀) | Å | 4.167 | 4.142 | 4.128 | 4.115 | 4.231 | 4.218 | 4.109 | 4.214 | 4.225 |
| Ni-B crystallite size (before 48 h of reaction, after hydrogen reduction ) | nm | 5.3 | 5.5 | 5.4 | 5.6 | 5.3 | 5.5 | 6.1 | 14.3 | 15.6 |
| Ni-B crystallite size (after 48 h of reaction) | nm | 14.4 | 12.8 | 10.5 | 11.3 | 20.1 | 19.3 | 17.2 | 39.7 | 42.5 |
| amount of coke depositio n (after 48 h of reaction) | wt% | 0.17 | 0.11 | 0.04 | 0.09 | 0.72 | 0.68 | 0.43 | 1.32 | 1.93 |
| CH₄ conversio n rate (Initial reaction, 0 h) | L/g·h | 507.1 | 504.8 | 502.2 | 501.4 | 513.0 | 512.2 | 510.7 | 432.0 | 442.8 |
| CO₂ conversio n rate (Initial reaction, 0 h) | L/g·h | 509.2 | 506.4 | 504.3 | 503.5 | 517.2 | 515.6 | 512.3 | 434.1 | 445.7 |
| CH₄ conversio n rate (after 48 h of reaction) | L/g·h | 511.9 | 514.2 | 515.7 | 513.6 | 496.8 | 497.5 | 503.5 | 437.4 | 410.4 |
| CO₂ conversio n rate (after 48 h of reaction) | L/g·h | 513.1 | 516.3 | 518.2 | 514.7 | 498.1 | 499.8 | 505.2 | 439.2 | 412.5 |
| Total CH₄ converted amount | L/g | 24456 | 24456 | 24430 | 24360 | 24235 | 24233 | 24341 | 20866 | 20477 |
| Total CO₂ converted amount | L/g | 24535 | 24545 | 24540 | 24437 | 24367 | 24370 | 24420 | 20959 | 20597 |

As a result of the reaction conducted for 48 hours, the initial CH₄ conversion rate of the Examples was 501 L/g·h to 508 L/g·h, and the CO₂ conversion rate was 503 L/g·h to 510 L/g·h. The CH₄ conversion rate of the Examples after 48 hours was 511 L/g·h to 516 L/g·h, and the CO₂ conversion rate was 513 L/g·h to 519 L/g·h, indicating higher catalytic activity compared to the Comparative Examples. In particular, it was confirmed that for the Comparative Examples, the conversion rate decreased after 48 hours of the reforming reaction, and the catalyst performance was not maintained but deteriorated as the reforming reaction proceeded. Furthermore, the amount of coke formation of the Examples after 48 hours was 0.2 wt% or less, and a smaller amount of coke was deposited than in the Comparative Examples.

In the case of the Example, the conversion rate of the reactant increased after 48 hours of reaction, and it was confirmed that this is because boron (B), which is a bimetallic element, forms an intermetallic compound with nickel during the reforming reaction, and due to the change in the electronic structure and the improvement in the dispersion of Ni nano-particles, coke deposition on the catalyst surface is suppressed, thereby improving the catalyst performance compared to the initial stage of the reaction.

It was confirmed that the BET specific surface area of the Examples was 40 m²/g to 50 m²/g, possessing a larger specific surface area than Comparative Example 4, which manufactured by the impregnation method. In addition, the MgO lattice constant of the Examples was 4.1 Å to 4.2 Å, possessing a smaller lattice constant than the Comparative Examples, and through this, it was confirmed that the lattice contraction of MgO occurs due to the addition of boron (B).

On the TEM and EDS mapping images after the methane reforming reaction at 900 °C for 48 hours, nickel (Ni) particles retaining the Ni-B intermetallic structure after the methane reforming reaction and having a size of 10 to 15 nm, which is smaller than that of the Comparative Examples, were observed. Consequently, it was confirmed that Examples 1 to 4 enable high activity and structural stability compared to the Comparative Examples.

## Claims

1. A catalyst for methane reforming comprising nickel (Ni), boron (B), and magnesium (Mg),
and a B content is more than 1 mol parts and less than 35 mol parts based on 100 mol parts of Mg.

2. The catalyst of claim 1, wherein:
the Mg in the catalyst for methane reforming is present in a form of MgO as a support.

3. The catalyst of claim 1, wherein:
a Ni content is 2 parts by weight to 10 parts by weight based on 100 parts by weight of the catalyst for methane reforming.

4. The catalyst of claim 1, wherein:
the catalyst for methane reforming has a BET specific surface area of 10 m²/g to 50 m²/g measured by a nitrogen adsorption method.

5. The catalyst of claim 1, wherein:
the catalyst for methane reforming has a lattice constant of MgO of 4.1 Å to 4.2 Å as measured by X-ray diffraction analysis.

6. The catalyst of claim 1, wherein:
wherein the catalyst for methane reforming comprises a Ni-B intermetallic compound structure having a size of 5 nm to 17 nm after 48 hours of methane reforming reaction.

7. The catalyst of claim 1, wherein:
the catalyst is used for a methane reforming reaction using carbon dioxide.

8. A manufacturing method of a catalyst for methane reforming, comprising:
preparing an aqueous solution mixture by mixing MgO, a nickel (Ni) precursor, and boron (B) precursor (step 1);
hydrothermally synthesizing the mixture of step 1 (step 2); and
drying and sintering the hydrothermally synthesized composition of step 2 (step 3);
wherein in step 1, the B precursor is mixed in an amount such that an B content is more than 1 mol parts and less than 35 mol parts based on 100 mol parts of Mg.

9. The manufacturing method of claim 8, wherein:
in step 1, the Ni precursor is mixed in an amount such that a Ni content is 2 parts of weight to 10 parts of weight based on 100 parts by weight of the catalyst for methane reforming.

10. The manufacturing method of claim 8, wherein:
the B precursor of step 1 is at least one selected from the group consisting of H₃BO₃, BI₃, BN, BF₃, BCl₃, B₂O₃, CB₄, BF₃·2H₂O, BBr₃, and LiBH₄.

11. The manufacturing method of claim 8, wherein:
the Ni precursor of step 1 is at least one selected from the group consisting of Ni(CH₃COO)₂·4H₂O), NiCl₂, NiCl₂·6H₂O, Ni(NO₃)₂, NiSO₄, (NH₄)₂Ni(SO₄)₂·6H₂O, NiBr₂, NiCO₃, NiF₂, NiI₂, NiC₂O₄·2H₂O and Ni(ClO₄)₂·6H₂O.

12. The manufacturing method of claim 8, wherein:
the hydrothermal synthesis of step 2 is performed at a temperature of 100 °C to 300 °C for 12 hours to 48 hours.

13. The manufacturing method of claim 8, wherein:
wherein the drying of step 3 is performed at 50 °C to 150 °C for 2 hours to 24 hours.

14. The manufacturing method of claim 8, wherein:
wherein the sintering of step 3 is performed at 600 °C to 1000 °C for 2 hours to 6 hours.
